# FASCICULE DE BREVET EUROPEEN

(11) **EP 3 983 741 B1**
(45) Date de publication et mention de la délivrance du brevet: **07.06.2023**
(21) Numéro de dépôt: 20733888.0
(22) Date de dépôt: 15.06.2020
(51) Int. Cl.: F28D 1/02, F28D 9/00, F28F 1/02, F28F 1/14, F28F 3/04, F02C 7/14, F28F 7/02, F28D 7/16, F28F 13/08

(54) **ÉCHANGEUR THERMIQUE DE REFROIDISSEMENT D'UN MOTEUR PROPULSIF D'AERONEF**
WÄRMETAUSCHER ZUR KÜHLUNG EINES FLUGZEUGTRIEBWERKS
HEAT EXCHANGER FOR COOLING AN AIRCRAFT PROPULSION ENGINE

(30) Priorité: 17.06.2019 FR 1906469
(43) Date de publication de la demande: 20.04.2022
(73) Titulaire: Sogeclair SA, 31700 Occitanie Blagnac (FR)
(72) Inventeur: BOULZAGUET, Alexandre, 31300 Toulouse (FR)
(74) Mandataire: Junca, Eric
(86) Numéro de dépôt international: PCT/EP2020/025284
(87) Numéro de publication internationale: WO 2020/253990

(56) Documents cités:
- FR-A- 899 582
- FR-A1- 2 959 209
- GB-A- 302 562
- GB-A- 843 965
- US-A- 2 171 047
- US-A- 2 792 200
- US-A- 3 818 984
- US-A- 3 831 374
- US-A- 4 213 297
- US-A1- 2010 043 386
- US-A1- 2013 236 299
- US-B2- 10 240 522

## Description

### Domaine technique

L'invention relève du domaine des aéronefs dont la propulsion est fournie par au moins un groupe motopropulseur. L'invention concerne un échangeur thermique de refroidissement d'un moteur que comprend un tel groupe motopropulseur.

### Art antérieur

Parmi les aéronefs, certains sont motorisés pour leur propulsion. A cet effet, de tels aéronefs sont équipés d'un groupe motopropulseur comprenant un moteur et un échangeur thermique de refroidissement du moteur. Classiquement, l'échangeur thermique comprend au moins deux chemins à circulation de fluides respectifs. L'un des fluides est un fluide de refroidissement du moteur, tel que de l'huile par exemple, qui est à refroidir par l'autre des fluides formé de flux d'air admis à l'intérieur de l'échangeur thermique par suite de la progression de l'aéronef.

Il est connu des échangeurs thermiques de conformation annulaire qui comprennent d'une part des premiers canaux de circulation des flux d'air à l'intérieur de l'échangeur thermique et d'autre part des deuxième canaux de circulation du fluide de refroidissement admis à l'intérieur de l'échangeur thermique. Les premiers canaux et les deuxièmes canaux s'étendent globalement suivant l'extension axiale de l'échangeur thermique, et sont ménagés radialement en alternance pour optimiser l'échange thermique entre les flux d'air et le fluide de refroidissement.

Il est plus spécifiquement connu d'agencer un tel échangeur thermique en un échangeur thermique modulaire comprenant plusieurs modules à échange thermique qui sont indépendants les uns des autres. Les modules sont répartis sur une circonférence autour de l'axe d'extension de l'échangeur thermique, en étant assemblés successivement deux à deux les uns aux autres.

Il est compris ici que l'indépendance des modules relève d'une structure et d'un fonctionnement des modules indépendamment les uns par rapport aux autres, chacun des modules comprenant les chemins à circulation de fluide qui leurs sont propres. Autrement dit chacun des modules comprend des premiers canaux et des deuxièmes canaux, le fluide de refroidissement étant refroidi indépendamment à l'intérieur de chacun des modules et étant ensuite renvoyé vers le moteur.

Le document US 2 792 200 A divulgue un échangeur thermique selon le préambule de la revendication 1.

### Exposé de l'invention

Dans ce contexte, l'invention a pour objet un échangeur thermique modulaire de refroidissement d'un moteur propulsif d'aéronef, du type précédemment décrit.

Un but de l'invention est de proposer un tel échangeur thermique dont la structure est optimisée et dont l'aptitude à refroidir le fluide de refroidissement est accrue pour optimiser les performances de l'échangeur thermique.

Un autre but de l'invention est de proposer un tel échangeur thermique dont l'agencement permet de réduire la trainée de l'aéronef, notamment pour exploiter au mieux l'effort de propulsion de l'aéronef fournit par le moteur dont il est équipé et/ou pour permettre une propulsion satisfaisante de l'aéronef à partir d'un moteur dont la puissance nominale peut être au mieux réduite.

Un autre but de l'invention est de proposer un tel échangeur thermique apte à refroidir de manière satisfaisante divers types de moteurs propulsifs de l'aéronef, dont notamment un moteur électrique.

Les buts visés par la présente invention sont atteints isolément ou en combinaison par application des dispositions qui suivent.

L'invention vise un échangeur thermique de refroidissement d'un moteur propulsif d'aéronef, l'échangeur thermique étant globalement conformé en anneau et comprenant une pluralité de modules à échange thermique qui sont indépendants les uns des autres en étant circonférenciellement répartis autour de l'axe de l'anneau, lesdits modules étant assemblés les uns aux autres en étant entretoisés successivement deux à deux, chaque module comprenant des premiers canaux de circulation de flux d'air générés par l'aéronef en progression, ainsi que des deuxièmes canaux de circulation de fluide de refroidissement. Un espace traversé par les flux d'air générés par l'aéronef en progression est ménagé entre deux modules adjacents, l'un au moins desdits espaces logeant au moins un élément à transfert thermique par conduction s'étendant entre des parois respectives d'au moins deux dits modules adjacents qui sont orientées en regard l'une sur l'autre.

Les modules présentent notamment des configurations sensiblement similaires et sont indépendants les uns des autres tel que précédemment mentionné. La similitude des modules est notamment relative à l'agencement et à la disposition de canaux à circulation de fluide qu'ils comportent respectivement et qui s'étendent essentiellement suivant l'extension axiale de l'échangeur thermique. Des premiers canaux sont des canaux d'admission et de circulation de flux d'air à l'intérieur des modules, notamment par suite de la progression de l'aéronef, et des deuxième canaux sont des canaux de circulation du fluide de refroidissement admis à l'intérieur des modules, les premiers canaux et les deuxièmes canaux étant ménagés radialement en alternance à l'intérieur de chacun des modules.

Selon l'invention, un échangeur thermique du type susvisé est reconnaissable en ce que l'un au moins desdits espaces loge au moins un élément à transfert thermique par conduction s'étendant entre des parois respectives d'au moins deux dits modules adjacents qui sont orientées en regard l'une sur l'autre.

Il est compris ici par élément à transfert thermique un élément structurel dissipant par conduction des calories ou par analogie des frigories qu'il reçoit, vers l'une au moins desdites parois avec laquelle l'élément à transfert thermique est en contact.

Plus spécifiquement lesdits espaces s'étendant à travers l'échangeur thermique suivant son extension axiale, ledit au moins un élément à transfert thermique est ventilé par un flux d'air généré par la progression de l'aéronef. Par suite, ledit au moins un élément à transfert thermique est refroidi par ledit flux d'air auquel il est soumis, et transfère les calories ou par analogie les frigories qu'il reçoit à l'une au moins desdites parois en regard entre lesquelles l'élément à transfert thermique est interposé.

Il en ressort que l'échangeur thermique est muni d'au moins un échangeur de température annexe par conduction qui est logé à l'intérieur d'un dit espace en étant interposé entre au moins deux modules adjacents, via ledit au moins un élément à transfert thermique qui est en contact avec l'une au moins desdites parois en regard l'une sur l'autre desdits modules adjacents. En outre, le profilage dudit au moins un élément à transfert thermique et/ou la répartition à l'intérieur d'un même dit espace d'une pluralité d'éléments à transfert thermique peuvent être mis à profit pour drainer le flux d'air traversant l'espace qui le loge, en conférant au dit flux d'air une dynamique réduisant la trainée de l'aéronef. De plus par suite de sa prise d'appui préférentiellement contre chacune desdites parois en regard, ledit au moins un élément à transfert thermique peut être exploité comme organe de renfort de l'échangeur thermique à l'encontre de sa déformation.

Ainsi selon une autre approche de l'invention, au moins deux modules adjacents constitutifs de l'échangeur thermique sont entretoisés via un dit échangeur de température annexe par conduction.

Selon l'invention, ledit au moins un élément à transfert thermique est intégré à l'une au moins desdites parois en regard l'une sur l'autre.

Ceci permet de simplifier la structure de l'échangeur de température annexe et par suite de simplifier les modalités de son installation à l'intérieur dudit au moins un espace. L'intégration dudit au moins un élément à transfert thermique à l'une au moins desdites parois peut être avantageusement réalisée dans le cadre d'une formation des modules par impression en trois dimensions.

Selon une forme de réalisation, lesdites parois en regard l'une sur l'autre délimitent à l'intérieur des modules dont elles sont respectivement constitutives, un canal de circulation d'un fluide de refroidissement à l'intérieur des modules, tel que de l'huile ou un liquide de refroidissement à changement d'état ou autrement dit à changement de phase.

La diminution de la température du fluide de refroidissement par apport de frigories via ledit au moins un élément à transfert thermique, ou autrement dit via l'échangeur de température annexe, en est favorisée.

De préférence, des éléments à transfert thermique en pluralité sont logés dans un même dit au moins un espace, pour optimiser l'efficacité de l'échangeur de température annexe.

De préférence encore, les éléments à transfert thermique en pluralité sont chacun agencés en ailettes orientées sensiblement suivant un plan global s'étendant entre lesdites parois en regard l'une sur l'autre.

Ceci facilite l'intégration des éléments à transfert thermique à la dite au moins une paroi, tout en optimisant l'efficacité de l'échangeur de température annexe.

De préférence encore, les éléments à transfert thermique en pluralité sont répartis entre les modules selon au moins une ligne directrice orientée suivant une génératrice définissant la surface de révolution de l'une quelconque de la face extérieure et de la face intérieure de l'anneau. De préférence, les éléments à transfert thermique en pluralité sont répartis entre les modules selon plusieurs dites lignes directrices parallèles entre elles.

La surface de révolution de l'anneau est notamment considérée à l'une au moins de ses faces orientées vers l'extérieur de l'échangeur thermique, tant la face extérieure de l'anneau identifiée par le diamètre extérieur de l'anneau que la face intérieure de l'anneau identifiée par le diamètre intérieur de l'anneau. Ceci permet d'éviter la formation éventuelle de turbulences à l'intérieur dudit au moins un espace.

Selon une forme de réalisation, l'anneau présente suivant sa tranche une variation d'épaisseur entre ses extrémités axiales. Le nombre d'éléments à transfert thermique varie axialement suivant la variation d'épaisseur de la tranche de l'anneau.

Il est compris par tranche de l'anneau la dimension de l'anneau considérée entre son diamètre extérieur et son diamètre intérieur. La variation d'épaisseur de la tranche de l'anneau est notamment progressivement continue entre les extrémités axiales de l'anneau.

De préférence, les génératrices définissant respectivement la face extérieure de l'anneau de plus grand diamètre et la face intérieure de l'anneau de plus petit diamètre sont courbes.

De préférence encore, les diamètres extérieurs et intérieurs de l'anneau varient progressivement entre ses extrémités axiales. Plus précisément, les diamètres extérieurs et intérieurs de l'anneau considérés à l'extrémité axiale amont de l'anneau sont de dimensions plus importantes que respectivement les diamètres extérieurs et intérieurs de l'anneau considérés à l'extrémité axiale aval de l'anneau. Les notions amont et aval sont considérées suivant le sens de circulation des flux d'air à l'intérieur de l'échangeur thermique placé en situation de fonctionnement sur l'aéronef en progression. Dans le présent exemple, le flux d'air généré par la progression de l'aéronef s'étend selon la direction radiale de l'échangeur. En outre, ladite variation d'épaisseur préférée de la tranche de l'anneau confère axialement à l'anneau une double courbure, suivant des génératrices différenciées définissant respectivement la surface de révolution extérieure et la surface de révolution intérieure de l'anneau.

Une telle conformation aérodynamique de l'anneau limite la formation de turbulences à sa face extérieure et permet de réduire la trainée de l'aéronef en progression. En outre de par la double courbure axiale de l'anneau ou autrement dit de par la variation d'épaisseur de sa tranche, la circulation des fluides à l'intérieur des modules s'en trouve régulée, de sorte que leur vitesse de circulation à travers les canaux qui leur sont affectés soit la plus constate possible quelque soit l'état du fluide.

Selon une forme de réalisation, ledit au moins un espace est fermé par un capot extérieur et un capot intérieur de l'anneau, qui sont ménagés respectivement à la face extérieure et à la face intérieure de l'anneau.

De tels capots permettent de canaliser l'air à l'intérieur dudit au moins un espace en évitant une échappée de l'air circulant à travers l'espace entre les extrémités axiales de l'anneau. Ceci permet d'optimiser l'échange thermique entre l'air admis à l'intérieur de l'espace et ledit au moins un élément à transfert thermique, et/ou favorise un écoulement laminaire de l'air à travers ledit au moins un espace.

Selon une forme de réalisation, lesdits capots sont chacun formés d'au moins un élément de capot solidaire de l'un au moins des deux dits modules adjacents.

Par exemple, les capots peuvent être chacun formés d'un unique élément de capot intégré à l'une ou l'autre desdites parois. Dans ce cas, l'élément de capot est intégré à l'une desdites parois et est de préférence scellé à l'autre desdites parois pour procurer un capotage étanche de l'espace.

Par exemple encore, les capots peuvent être chacun formés d'un couple d'éléments de capot respectivement intégrés à l'une et l'autre desdites parois, en étant de préférence scellés à leurs bords de jonction l'un à l'autre qui s'étend suivant l'extension axiale de l'anneau pour procurer un capotage étanche de l'espace.

Par exemple encore, les capots ou éléments de capots intégrés à une même dite paroi, peuvent être solidaires l'un de l'autre en étant ménagés aux extrémités d'une paroi de jonction s'étendant entre la face extérieure et la face intérieure de l'anneau. Autrement dit, les capots peuvent être reliés entre eux par une dite paroi de jonction en formant un corps unitaire présentant radialement un profil en U, dont les ailes forment les capots ou éléments de capots respectivement extérieur et intérieur et dont le fond ménage la paroi de jonction qui est apposée en application contre l'une desdites parois en regard.

Dans ce cas ladite paroi de jonction :
- participe de l'échangeur de température annexe par conduction, en favorisant une répartition homogène des calories ou frigories fournies par ledit au moins un élément à transfert thermique vers la surface de la paroi du module contre laquelle la paroi de jonction est apposée ; et/ou
- comporte de préférence au moins une ouverture de passage à son travers dudit au moins un élément à transfert thermique, notamment des ouvertures de passage individuel desdites ailettes à travers ladite paroi de jonction.

Selon une forme avantageuse de réalisation, les modules constitutifs de l'échangeur thermique sont réalisés par impression en trois dimensions d'un métal, notamment de l'aluminium.

Selon des caractéristiques préférées, combinables entre elles et avec les précédentes :
- les éléments à transfert thermique sont constitués d'ailettes saillantes chacune sensiblement perpendiculairement à une desdites paroi de module ;
- chaque ailette est faite d'une seule pièce avec la paroi ;
- lesdites parois de module délimitent chacune un desdits deuxièmes canaux de circulation de fluide de refroidissement ;
- dans au moins un desdits espaces ménagé entre deux modules adjacents, chaque élément à transfert thermique est réalisé par deux ailettes saillantes disposées dans le prolongement l'une de l'autre, l'une de ces ailettes étant saillante de l'une desdites parois en regard, et l'autre de ces ailettes étant saillante de l'autre paroi en regard ;
- l'échangeur comporte, pour chaque élément de transfert thermique, une distance de séparation entre les extrémités des deux ailettes ;
- les premiers canaux et les espaces s'étendent dans la même direction qui est celle du flux d'air ;
- les deuxièmes canaux s'étendent également dans la même direction qui est celle du flux d'air.

### Présentation des figures

L'invention sera mieux comprise à la lecture de la description détaillée qui suit d'un exemple de réalisation de la présente invention, en relation avec les figures suivantes :
[Fig. 1] La figure 1 est une illustration en perspective d'un échangeur thermique selon un exemple de réalisation de l'invention.
[Fig. 2] La figure 2 est une illustration en perspective d'un détail de l'échangeur thermique représenté sur la figure 1.
[Fig. 3] La figure 3 est une illustration en perspective d'un couple de modules à échange thermique adjacents que comprend l'échangeur thermique représenté sur la figure 1.

### Description détaillée

Les figures et leurs descriptions détaillées non limitatives, exposent l'invention selon des modalités particulières qui ne sont pas restrictives quant à la portée de l'invention telle que revendiquée. Les figures et leurs descriptions détaillées d'un exemple de réalisation de l'invention peuvent servir à mieux la définir, si besoin en relation avec la description générale qui vient d'en être faite. Par ailleurs pour éviter une surcharge des figures et faciliter leur lecture, les numéros de référence affectés aux termes et/ou aux notions utilisés pour décrire l'invention et indiqués sur l'une quelconque des figures, sont potentiellement repris dans la description d'une quelconque autre figure sans impliquer leur présence sur l'ensemble des figures.

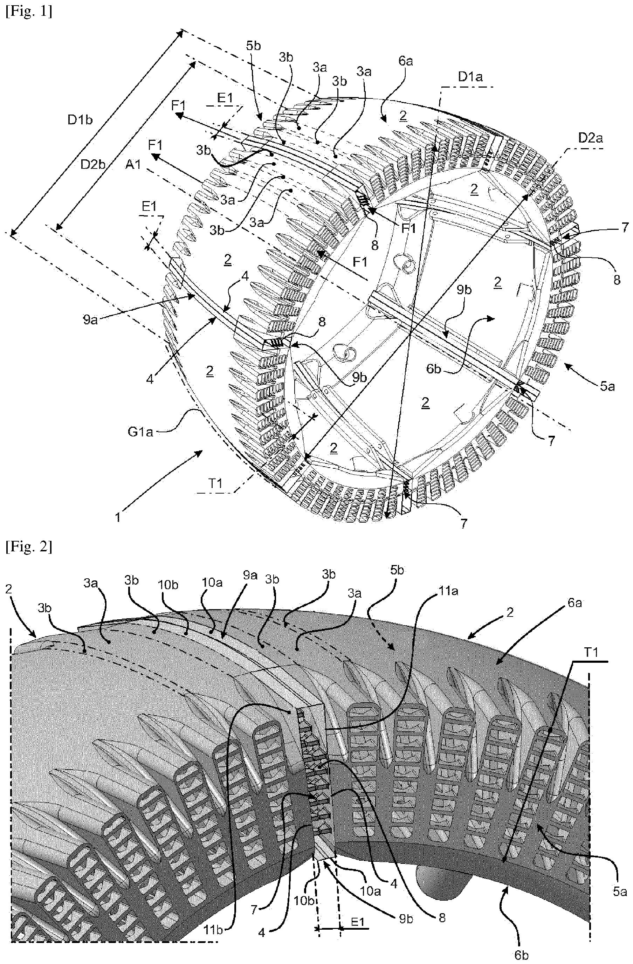

Sur la figure 1, un échangeur thermique 1 de refroidissement d'un moteur propulsif d'aéronef présente une conformation annulaire d'axe A1. L'échangeur 1 est prévu pour tout type d'aéronef motorisé tels que avions, hélicoptères, fusées, missiles, etc.

L'échangeur thermique 1 comprend une pluralité de modules 2 à échange thermique qui sont indépendants les uns des autres en étant circonférenciellement répartis autour de l'axe A1 de l'anneau. Les modules 2 sont assemblés les uns aux autres, en étant entretoisés successivement deux à deux avec pour conséquence la formation d'espaces E1 ménagés entre deux modules 2 adjacents. L'entretoisement permet la constitution d'un ensemble d'échange thermique annulaire modulaire dont la structure mécanique est optimisée. De tels espaces E1 sont chacun traversés par des flux d'air F1a générés par l'aéronef en progression. Chaque espace E1 forme un canal de circulation du flux d'air F1a généré par l'aéronef en progression.

Chaque module 2 comprend des premiers canaux 3a de circulation de flux d'air F1b générés par l'aéronef en progression. Les flux d'air F1b traversant les modules 2 sont exploités pour le refroidissement d'un fluide de refroidissement qui circule à travers des deuxièmes canaux 3b que comprennent chacun des modules 2 et qui est exploité en sortie de l'échangeur thermique 1 pour refroidir un moteur propulsif de l'aéronef. Il est compris à la lecture des figures que les premiers canaux 3a et les deuxièmes canaux 3b sont illustrés en traits interrompus et référencés partiellement en nombre.

Les premiers canaux 3a, situés à l'intérieur des modules 2, et les canaux formés par les espaces E1 s'étendent dans la même direction (c'est-à-dire dans la direction du flux d'air F1a). Tout ces canaux 3a, 2 sont parallèles et sont répartis sur la circonférence de l'échangeur thermique 1.

Les deuxièmes canaux 3b s'étendent également dans la même direction F1a que les premiers canaux 3a et les canaux formés par les espaces E1.

La conception interne de l'échangeur est ainsi à la fois simplifiée et optimisée, tous les canaux qui font circuler le flux F1a d'air (premiers canaux 3a et canaux formés par les espaces E1), ainsi que tous les canaux qui font circuler le fluide à refroidir (deuxièmes canaux 3b) s'étendent dans la même direction, en partageant entre eux des parois d'échange de chaleur.

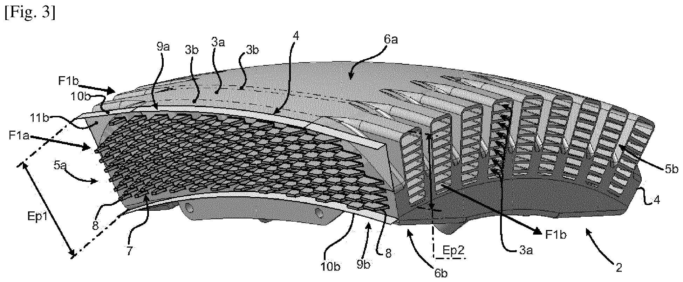

Plus particulièrement visible sur les figures 2 et 3, on notera que les modules 2 sont pourvus à chacune de leurs extrémités radiales d'un dit deuxième canal 3b qui est délimité au moins par une paroi 4 d'extrémité radiale des modules 2 qui est orientée vers les espaces E1 de séparation entre deux modules 2 adjacents. Autrement dit, les parois 4 d'extrémités radiales des modules 2 adjacents sont des parois 4 des modules 2 qui sont orientées en regard l'une sur l'autre, un dit espace E1 étant ménagé entre elles.

L'anneau formant l'échangeur thermique 1 présente plus précisément une conformation globalement conique en étant effilé axialement A1 depuis une extrémité axiale 5a amont de l'anneau vers une extrémité axiale 5b aval de l'anneau, les notions amont et aval étant définies suivant le sens de circulation des flux d'air F1a, F1b à travers l'échangeur thermique 1. L'anneau formant l'échangeur thermique 1 présente une face extérieure 6a identifiée par au moins un plus grand diamètre extérieur D1a, D1b de l'anneau et une face intérieure 6b identifiée par au moins un plus petit diamètre intérieur D2a, D2b de l'anneau.

Plus particulièrement visible sur la figure 3, une première génératrice définissant la surface de révolution de la face extérieure 6a de l'anneau et une deuxième génératrice définissant la surface de révolution de la face intérieure 6b de l'anneau sont différenciées, ce qui confère axialement A1 à l'anneau une double courbure respectivement à sa face extérieure 6a et à sa face intérieure 6b.

Lesdits espaces E1 logent chacun des éléments à transfert thermique 7 par conduction, qui s'étendent entre les parois 4 en regard respectives de deux modules 2 adjacents. Les éléments à transfert thermique 7 sont soumis au flux d'air F1a traversant les espaces E1 lors de la progression de l'aéronef pour leur refroidissement. Les éléments à transfert thermique 7 ainsi refroidis transfèrent par conduction leur température aux dites parois 4 en regard pour participer, via lesdites parois 4 en regard, au refroidissement du fluide de refroidissement.

Plus particulièrement visible sur les figures 2 et 3, les éléments à transfert thermique 7 sont formés d'une pluralité d'ailettes 8 qui sont intégrés aux parois 4 en regard de deux modules 2 adjacents, respectivement par jeux d'ailettes 8. Chaque ailette 8 est saillantes sensiblement perpendiculairement à la paroi 4, en étant faite d'une seule pièce avec la paroi 4.

Les ailettes 8 s'étendent chacune principalement suivant un plan global qui est orienté entre les parois 4 en regard l'une sur l'autre. Chaque espace E1 est délimité par deux parois 4 d'extrémité radiale de deux modules 2, et chacune de ces parois 4 délimite également l'un des deuxièmes canaux 3b. Dans chaque espace E1, chaque élément à transfert thermique 7 est réalisé par deux ailettes 8 saillantes disposées dans le prolongement l'une de l'autre, l'une de ces ailettes 8 étant saillante de l'une des parois 4 délimitant l'escape E1, et l'autre de ces ailettes étant saillante de l'autre paroi 4. Autrement dit, les ailettes 8 sont disposées par paires d'ailettes 8 qui sont saillantes chacun d'une des parois 4 en se faisant face.

Par ailleurs, pour chaque paire d'ailettes 8 se faisant face, les extrémités de ces ailettes 8 ne se touchent pas, une faible distance de séparation étant prévue entre les deux extrémités de ces ailettes 8 en vis-à-vis (voir figure 3). Ce montage permet d'assurer un échange de chaleur dans les espaces E1 aussi performant que dans les premiers canaux 3a, tout en maintenant la possibilité de démonter l'échangeur 1 en désassemblant les modules 2, sans aucune intervention sur les éléments de transfert thermique 7. Le montage comme le démontage mutuels des modules 2 assemble ou désassemble les élément de transfert thermique 7 réalisés par les ailettes 8 conjointement aux modules 2, facilement et rapidement.

De plus, pour chaque paire d'ailettes 8 en vis-à-vis dans l'espace E1, la distance de séparation prévue entre les deux extrémités d'ailettes 8 autorise les déformations induites par les changements de température, sans conséquences sur la structure mécanique de l'ensemble. Ces distances de séparation permettent également de créer des échangeurs modulaires dans lesquels, par exemple, un module 2 peut être ajouté à un échangeur 1 existant, en étant intercalé entre deux autres modules 2. L'échangeur 1 sera alors modifié par l'ajout d'un module 1 et augmentera alors de diamètre, ce qui changera les angles formés à la jonction de chaque paire de modules 2, sans conséquence sur l'échange de chaleur au niveau des espaces E1, grâce à la présence de ces distances de séparation entre chaque paire d'ailettes 8 en vis-à-vis.

Plus particulièrement visible sur la figure 3, les génératrices définissant les surfaces de révolution respectivement de la face extérieure 6a et de la face intérieure 6b de l'anneau sont différenciées tel que précédemment visé. L'anneau présente dès lors suivant sa tranche T1 une variation d'épaisseur Ep1, Ep2 entre ses extrémités 5a, 5b axiales. Les ailettes 8 sont reparties entre les modules 2 selon plusieurs dites lignes directrices parallèles entre elles qui s'étendent notamment suivant l'une des dites génératrices, tel que par exemple suivant la deuxième génératrice définissant la surface de révolution de la face intérieure 6b de l'anneau.

Par suite, le nombre d'ailettes 8 ménagées à l'intérieur de chacun des espaces E1 varie axialement A1 suivant la variation d'épaisseur Ep1, Ep2 de la tranche T1 de l'anneau. Plus précisément en considérant le nombre d'ailettes 8 ménagées aux extrémités axiales 5a, 5b respectives de l'anneau, le nombre d'ailettes 8 diminue depuis l'extrémité axiale 5a amont de l'anneau vers son extrémité axiale 5b aval. D'autres variantes non représentées de répartition des ailettes 8 à l'intérieur des espaces E1 peuvent être mises en oeuvre, notamment selon les conditions de drainage des flux d'air F1a traversant les espaces E1 permettant de contrôler leur écoulement et ainsi réduire au mieux la trainée de l'aéronef.

Plus particulièrement visible sur les figures 2 et 3, les espaces E1 sont fermés à la face extérieure 6a de l'anneau et à la face intérieure 6b de l'anneau pour canaliser les flux d'air F1a qui traversent les espaces E1 et forcer leur passage entre les ailettes 8 pour leur refroidissement. A cet effet, des capots 9a, 9b sont placés respectivement à la face extérieure 6a de l'anneau pour un capot extérieur 9a et à la face intérieure 6b de l'anneau pour un capot intérieur 9b.

Selon l'exemple illustré, chacun des capots 9a, 9b est composé de deux éléments de capot 10a, 10b qui sont respectivement solidaires des parois 4 en regard de deux modules 2 adjacents. Les bords adjacents d'extension axiale A1 des éléments de capot 10a, 10b constitutifs d'un même de capot 9a, 9b sont scellés l'un à l'autre pour interdire une échappée entre eux de l'air issu du flux d'air F1a s'écoulant à travers les espaces E1.

Les éléments de capot 10a, 10b solidaires d'une même paroi 4 constitutive d'un module 2 sont reliés solidairement l'un à l'autre en étant ménagés aux extrémités respectives d'une paroi de jonction 11a, 11b s'étendant entre la face extérieure 6a et la face intérieure 6b de l'anneau. Autrement dit, un élément de capotage d'un même espace E1 est formé d'un ensemble monobloc agencé en un profilé qui présente un profil conformé en U. L'élément de capotage comprend un élément de capot extérieur 10a ou 10b et un élément de capot intérieur 10a, 10b reliés entre eux par une paroi de jonction 11a, 11b. Deux éléments de capotage coopérant entre eux sont appliqués contre respectivement les parois 4 en regard de deux modules 2 adjacents.

On notera que les espaces E1 séparant deux modules adjacents sont dès lors chacun occupés par un échangeur de température annexe par conduction qui est interposé entre deux modules adjacents. L'échangeur de température annexe comprend un boitier formé par les dits éléments de capotage accostés l'un à l'autre, ledit boitier logeant les éléments à transfert thermique 7 permettant de refroidir les parois 4 en regard des deux modules adjacents.

Chacun des modules 2 est avantageusement réalisé par impression en trois dimensions d'un matériau métallique, aluminium notamment. Selon une forme de réalisation non représentée, chacun des modules 2 peut être composé de plusieurs modules élémentaires qui sont individuellement réalisés par impression en trois dimensions et qui sont axialement A1 aboutés l'un contre l'autre en communication fluidique. Un tel aboutement peut être réalisé par scellement et/ou par emboîtements successifs, éventuellement étanches, des modules élémentaires deux à deux, les premiers canaux 3a et les deuxièmes canaux 3b des modules élémentaires aboutés étant respectivement en communication fluidique entre eux. Ceci permet de réaliser les modules 2 par impression en trois dimensions à moindres coûts et/ou de permettre de conférer à l'échangeur thermique 1 une adaptation à moindres coûts de son extension axiale A1 selon les besoins de refroidissement à fournir.

## Revendications

1. Échangeur thermique (1) de refroidissement d'un moteur propulsif d'aéronef, l'échangeur thermique (1) étant globalement conformé en anneau et comprenant une pluralité de modules (2) à échange thermique qui sont indépendants les uns des autres en étant circonférenciellement répartis autour de l'axe (A1) de l'anneau, lesdits modules (2) étant assemblés les uns aux autres en étant entretoisés successivement deux à deux, chaque module comprenant des premiers canaux (3a) de circulation de flux d'air (F1b) générés par l'aéronef en progression, ainsi que des deuxièmes canaux (3b) de circulation de fluide de refroidissement, un espace (E1) étant ménagé entre deux modules (2) adjacents, l'un au moins desdits espaces (E1) logeant au moins un élément à transfert thermique (7) par conduction s'étendant entre des parois (4) respectives d'au moins deux dits modules (2) adjacents qui sont orientées en regard l'une sur l'autre, cet échangeur thermique étant **caractérisé en ce que** l'espace (E1) est traversé par les flux d'air (F1a) générés par l'aéronef en progression et **en ce que** ledit au moins un élément à transfert thermique (7) est intégré à l'une au moins desdites parois (4) en regard l'une sur l'autre.

2. Échangeur thermique (1) selon la revendication 1, **caractérisé en ce que** lesdites parois (4) en regard l'une sur l'autre délimitent à l'intérieur des modules (2) dont elles sont respectivement constitutives, un canal (3b) de circulation d'un fluide de refroidissement à l'intérieur des modules (2).

3. Échangeur thermique (1) selon l'une quelconque des revendications 1 à 2, **caractérisé en ce que** des éléments à transfert thermique (7) en pluralité sont logés dans un même dit au moins un espace (E1).

4. Échangeur thermique (1) selon la revendication 3, **caractérisé en ce que** les éléments à transfert thermique (7) en pluralité sont chacun agencés en ailettes (8) orientées sensiblement suivant un plan global s'étendant entre lesdites parois (4) en regard l'une sur l'autre.

5. Échangeur thermique (1) selon l'une quelconque des revendications 3 et 4, **caractérisé en ce que** les éléments à transfert thermique (7) en pluralité sont répartis entre les modules (2) selon au moins une ligne directrice orientée suivant une génératrice définissant la surface de révolution de l'une quelconque de la face extérieure (6a) et de la face intérieure (6b) de l'anneau.

6. Échangeur thermique (1) selon l'une quelconque des revendications 3 à 5, **caractérisé en ce que** l'anneau présentant suivant sa tranche (T1) une variation d'épaisseur (Ep1, Ep2) entre ses extrémités axiales (5a, 5b), le nombre d'éléments à transfert thermique (7) varie axialement (A1) suivant la variation d'épaisseur (Ep1, Ep2) de la tranche (T1) de l'anneau.

7. Échangeur thermique (1) selon l'une quelconque des revendications 1 à 6, **caractérisé en ce que** ledit au moins un espace (E1) est fermé par un capot extérieur (9a) et un capot intérieur (9b) de l'anneau ménagés respectivement à la face extérieure (6a) et à la face intérieure (6b) de l'anneau.

8. Échangeur thermique (1) selon la revendication 7, **caractérisé en ce que** lesdits capots (9a, 9b) sont chacun formés d'au moins un élément de capot (10a, 10b) intégré à l'un au moins des deux dits modules (2) adjacents.

9. Échangeur thermique (1) selon l'une quelconque des revendications 1 à 8, **caractérisé en ce que** les modules (2) constitutifs de l'échangeur thermique (1) sont réalisés par impression en trois dimensions d'un métal.

10. Échangeur thermique selon l'une des revendications précédentes, **caractérisé en ce que** les éléments à transfert thermique (7) sont constitués d'ailettes (8) saillantes chacune sensiblement perpendiculairement à une desdites parois (4) de module (2).

11. Échangeur thermique selon la revendication 10, **caractérisé en ce que** chaque ailette (8) est faite d'une seule pièce avec la paroi (4).

12. Échangeur thermique selon l'une des revendications précédentes, **caractérisé en ce que** lesdites parois (4) de module (2) délimitent chacune un desdits deuxièmes canaux (3b) de circulation de fluide de refroidissement.

13. Échangeur thermique selon l'une des revendications précédentes, **caractérisé en ce que**, dans au moins un desdits espaces (E1) ménagé entre deux modules (2) adjacents, chaque élément à transfert thermique (7) est réalisé par deux ailettes (8) saillantes disposées dans le prolongement l'une de l'autre, l'une de ces ailettes (8) étant saillante de l'une desdites parois (4) en regard, et l'autre de ces ailettes (8) étant saillante de l'autre paroi (4) en regard.

14. Échangeur thermique selon la revendication 13, **caractérisé en ce qu'**il comporte, pour chaque élément de transfert thermique (7), une distance de séparation entre les extrémités des deux ailettes (8).

15. Échangeur thermique selon l'une des revendications précédentes, **caractérisé en ce que** les premiers canaux (3a) et les espaces (E1) s'étendent dans la même direction qui est celle du flux d'air (F1a).

16. Échangeur thermique selon la revendication 15, **caractérisé en ce que** les deuxièmes canaux (3b) s'étendent également dans la même direction qui est celle du flux d'air (F1a).

## Patentansprüche

1. Wärmetauscher (1) zum Kühlen eines Antriebsmotors eines Luftfahrzeugs, wobei der Wärmetauscher (1) insgesamt ringförmig ausgebildet ist und mehrere Wärmetauschmodule (2) umfasst, die voneinander unabhängig sind, indem sie in Umfangsrichtung um die Achse (A1) des Rings verteilt sind, wobei die Module (2) miteinander verbunden sind, indem sie aufeinanderfolgend paarweise verstrebt sind, wobei jedes Modul erste Kanäle (3a) zur Zirkulation von Luftströmen (F1b), die durch das sich fortbewegende Luftfahrzeug erzeugt werden, sowie zweite Kanäle (3b) zur Zirkulation von Kühlfluid umfasst, wobei zwischen zwei benachbarten Modulen (2) ein Raum (E1) ausgebildet ist, wobei mindestens einer der Räume (E1) mindestens ein Element (7) zur Wärmeübertragung durch Leitung aufnimmt, das sich zwischen jeweiligen einander gegenüberliegenden Wänden (4) von mindestens zwei der benachbarten Module (2) erstreckt, wobei der Wärmetauscher **dadurch gekennzeichnet ist, dass** der Raum (E1) von den Luftströmen (F1a) durchquert wird, die von dem sich fortbewegenden Luftfahrzeug erzeugt werden, und dass das mindestens eine Wärmeübertragungselement (7) in mindestens eine der einander gegenüberliegenden Wände (4) integriert ist.

2. Wärmetauscher (1) nach Anspruch 1, **dadurch gekennzeichnet, dass** die einander gegenüberliegenden Wände (4) im Inneren der Module (2), aus denen sie jeweils gebildet sind, einen Kanal (3b) zur Zirkulation eines Kühlfluids im Inneren der Module (2) begrenzen.

3. Wärmetauscher (1) nach einem der Ansprüche 1 bis 2, **dadurch gekennzeichnet, dass** mehrere Wärmeübertragungselemente (7) in ein und demselben mindestens einen Raum (E1) aufgenommen sind.

4. Wärmetauscher (1) nach Anspruch 3, **dadurch gekennzeichnet, dass** die mehreren Wärmeübertragungselemente (7) jeweils als Rippen (8) angeordnet sind, die im Wesentlichen in einer Gesamtebene ausgerichtet sind, die sich zwischen den einander gegenüberliegenden Wänden (4) erstreckt.

5. Wärmetauscher (1) nach einem der Ansprüche 3 und 4, **dadurch gekennzeichnet, dass** die mehreren Wärmeübertragungselemente (7) auf die Module (2) entlang einer Führungslinie verteilt sind, die entlang einer Erzeugenden ausgerichtet ist, die die Rotationsfläche einer beliebigen der Außenseite (6a) und der Innenseite (6b) des Rings definiert.

6. Wärmetauscher (1) nach einem der Ansprüche 3 bis 5, **dadurch gekennzeichnet, dass** der Ring entlang seiner Tranche (T1) eine Dickenänderung (Ep1, Ep2) zwischen seinen axialen Enden (5a, 5b) aufweist, wobei die Anzahl der Wärmeübertragungselemente (7) axial (A1) entlang der Dickenänderung (Ep1, Ep2) der Tranche (T1) des Rings variiert.

7. Wärmetauscher (1) nach einem der Ansprüche 1 bis 6, **dadurch gekennzeichnet, dass** der mindestens eine Raum (E1) durch eine äußere Abdeckung (9a) und eine innere Abdeckung (9b) des Rings, die an der Außenseite (6a) bzw. an der Innenseite (6b) des Rings angeordnet sind, verschlossen ist.

8. Wärmetauscher (1) nach Anspruch 7, **dadurch gekennzeichnet, dass** die Abdeckungen (9a, 9b) jeweils aus mindestens einem Abdeckungselement (10a, 10b) gebildet sind, das in mindestens eines der beiden benachbarten Module (2) integriert ist.

9. Wärmetauscher (1) nach einem der Ansprüche 1 bis 8, **dadurch gekennzeichnet, dass** die Module (2), die den Wärmetauscher (1) bilden, durch dreidimensionales Drucken eines Metalls ausgeführt sind.

10. Wärmetauscher nach einem der vorangehenden Ansprüche, **dadurch gekennzeichnet, dass** die Wärmeübertragungselemente (7) aus Rippen (8) gebildet sind, die jeweils im Wesentlichen senkrecht zu einer der Wände (4) des Moduls (2) vorstehen.

11. Wärmetauscher nach Anspruch 10, **dadurch gekennzeichnet, dass** jede Rippe (8) einstückig mit der Wand (4) ausgebildet ist.

12. Wärmetauscher nach einem der vorangehenden Ansprüche, **dadurch gekennzeichnet, dass** die Wände (4) des Moduls (2) jeweils einen der zweiten Kanäle (3b) zur Zirkulation von Kühlfluid begrenzen.

13. Wärmetauscher nach einem der vorangehenden Ansprüche, **dadurch gekennzeichnet, dass** in mindestens einem der Räume (E1), der zwischen zwei benachbarten Module (2) vorgesehen ist, jedes Wärmeübertragungselement (7) durch zwei vorstehende Rippen (8), die in der Verlängerung der jeweils anderen angeordnet sind, ausgeführt ist, wobei jede dieser Rippen (8) von einer der einander gegenüberliegenden Wände (4) vorsteht und die andere dieser Rippen (8) von der anderen gegenüberliegenden Wand (4) vorsteht.

14. Wärmetauscher nach Anspruch 13, **dadurch gekennzeichnet, dass** er für jedes Wärmeübertragungselement (7) einen Trennabstand zwischen den Enden der beiden Rippen (8) aufweist.

15. Wärmetauscher nach einem der vorangehenden Ansprüche, **dadurch gekennzeichnet, dass** sich die ersten Kanäle (3a) und die Räume (E1) in derselben Richtung erstrecken, die die Richtung des Luftstroms (F1a) ist.

16. Wärmetauscher nach Anspruch 15, **dadurch gekennzeichnet, dass** sich die zweiten Kanäle (3b) ebenfalls in derselben Richtung erstrecken, die die Richtung des Luftstroms (F1a) ist.

## Claims

1. A heat exchanger (1) for cooling an aircraft propulsion engine, the heat exchanger (1) being generally ring-shaped and comprising a plurality of heat exchange modules (2) which are mutually independent, being distributed circumferentially about the axis (A1) of the ring, said modules (2) being assembled with one another, being successively spaced apart in pairs, each module comprising first channels (3a) for the circulation of the air flow (F1b) generated by the advancing aircraft,in addition to second channels (3b) for the circulation of cooling fluid, a space(E1) being provided between two adjacent modules (2), at least one of said spaces (E1) receiving at least one conductive heat-transfer element (7) extending between respective walls (4) of at least two adjacent said modules (2) which are oriented facing one another, this heat exchanger being **characterized in that** a space (E1) is traversed by the air flows (F1a) generated by the advancing aircraft **in that** said at least one heat-transfer element (7) is integrated in at least one of said walls (4) facing one another.

2. The heat exchanger (1) as claimed in claims 1, **characterized in that** said walls (4) facing one another inside the modules (2), of which the walls are respectively a constituent part, delimit a channel (3b) for the circulation of a cooling fluid inside the modules (2) .

3. The heat exchanger (1) as claimed in any one of claims 1 to 2, **characterized in that** a plurality of heat-transfer elements (7) are received in said at least one and the same space (E1).

4. The heat exchanger (1) as claimed in claim 3, **characterized in that** a plurality of heat-transfer elements (7) are each arranged in fins (8) oriented substantially according to an overall plane extending between said walls (4) facing one another.

5. The heat exchanger (1) as claimed in any one of claims 3 and 4, **characterized in that** a plurality of heat-transfer elements (7) are distributed between the modules (2) according to at least one guideline oriented according to a generatrix defining the surface of revolution of any one of the external face (6a) and the internal face (6b) of the ring.

6. The heat exchanger (1) as claimed in any one of claims 3 to 5, **characterized in that** since the ring has along its edge (T1) a variation in thickness (Ep1, Ep2) between its axial ends (5a, 5b), the number of heat-transfer elements (7) varies axially (A1) according to the variation in thickness (Ep1, Ep2) of the edge (T1) of the ring.

7. The heat exchanger (1) as claimed in any one of claims 1 to 6, **characterized in that** said at least one space (E1) is closed by an external cover (9a) and an internal cover (9b) of the ring, which are respectively created on the external face (6a) and the internal face (6b) of the ring.

8. The heat exchanger (1) as claimed in claim 7, **characterized in that** said covers (9a, 9b) are each formed by at least one cover element (10a, 10b) integral with at least one of said two adjacent modules (2).

9. The heat exchanger (1) as claimed in any one of claims 1 to 8, **characterized in that** the constituent modules (2) of the heat exchanger (1) are produced by printing a metal in three dimensions.

10. The heat exchanger (1) as claimed in one of the preceding claims, **characterized in that** the heat-transfer elements (7) consist of fins (8), each protruding substantially perpendicularly from one of said module (2) walls (4).

11. The heat exchanger as claimed in claim 10, **characterized in that** each fin (8) is made in one piece with the wall (4).

12. The heat exchanger as claimed in one of the preceding claims, **characterized in that** said module (2) walls (4) each delimit one of said second channels (3b) for the circulation of cooling fluid.

13. The heat exchanger as claimed in one of the preceding claims, **characterized in that** in at least one of said spaces (E1) created between two adjacent modules (2), each heat-transfer element (7) is produced by two protruding fins (8) arranged in the extension of one another, one of these fins (8) protruding from one of said opposing walls (4) and the other of these fins (8) protruding from the other opposing wall (4).

14. The heat exchanger as claimed in claim 13, **characterized in that** it comprises, for each heat-transfer element (7), a separating distance between the ends of the two fins (8).

15. The heat exchanger as claimed in one of the preceding claims, **characterized in that** the first channels (3a) and the spaces (E1) extend in the same direction which is that of the air flow (F1a).

16. The heat exchanger as claimed in claim 15, **characterized in that** the second channels (3b) also extend in the same direction which is that of the air flow (F1a).
